Europäisches Patentamt

European Patent Office

Office européen des brevets

(11) Publication number: **0 070 056**
**B1**

# (12) EUROPEAN PATENT SPECIFICATION

(45) Date of publication of patent specification: **11.09.85**

(51) Int. Cl.⁴: **C 05 C 1/02**

(21) Application number: **82200763.9**

(22) Date of filing: **19.06.82**

(54) **Process for preparing thermally stable ammonium nitrate-containing granules of high bulk density.**

(30) Priority: **19.06.81 NL 8102960**

(43) Date of publication of application:
**19.01.83 Bulletin 83/03**

(45) Publication of the grant of the patent:
**11.09.85 Bulletin 85/37**

(84) Designated Contracting States:
**AT BE DE FR GB IT NL SE**

(56) References cited:
**BE-A- 675 700
FR-A-1 309 248
FR-A-2 451 351
GB-A- 990 487
GB-A-1 060 182
GB-A-1 136 019
NL-A- 242 422
NL-A- 268 086
US-A-1 868 890
US-A-1 952 849**

**The file contains technical information
submitted after the application was filed and
not included in this specification**

(73) Proprietor: **UNIE VAN KUNSTMESTFABRIEKEN
B.V.
Maliebaan 81
NL-3581 CG Utrecht (NL)**

(72) Inventor: **Mutsers, Stanislaus Martinus Petrus
Eindstraat 9
NL-6166 EH Geleen (NL)**
Inventor: **Hoek, Cornelis
R.van Gelrestraat 38
NL-6118 AD Nieuwstadt (NL)**
Inventor: **Wagemans, Gerardus Mathias
Cornelis
Dopheide 8
NL-6081 CC Haelen (NL)**

(74) Representative: **Roeffen, Wilhelmus Johannes
Maria et al
OCTROOIBUREAU DSM Postbus 9
NL-6160 MA Geleen (NL)**

Courier Press, Leamington Spa, England.

## Description

The invention relates to a process for preparing thermally stable ammoniumnitrate-containing granules of high bulk density, on the basis of a melt containing magnesiumnitrate and ammoniumnitrate by spraying said melt into a fluidized bed of ammonium nitrate-containing seed particles.

A process of this kind is known from US Patent Specification No. 4.316.736. According to this process an ammoniumnitrate-containing solution, which includes a maximum of 20% by weight, in particular 5—10% wt., of water and 0.5—3% wt. magnesiumnitrate, is sprayed onto a fluidized bed of ammonium nitrate seed particles having a temperature of between 120 and 135°C, after which the granules discharged from the bed are cooled at such a slow rate that they remain virtually homogeneous in temperature in the range between 70 and 50°C.

A disadvantage of this known process is that the finished product has a rather high water content (about 0.3% wt.). When stored granules with such a high water content show increased caking tendency and poorer hygroscopic behaviour, which in general makes it necessary to apply rather a large quantity of coating agent to them.

Another disadvantage of this process is that in the 70→50°C range the granules need to be cooled slowly, which means that for a given quantity of product a relatively big cooling installation is required. In addition, application of this cooling method implies the necessity of using more than one cooling stage, in general three discrete stages (one for cooling down to 70°C, one for the 70→50°C range, one for the range below 50°C).

Finally, this process has the disadvantage of a rather high bed temperature being applied. It has been found that at high bed temperatures the seeds in the bed show increased caking tendency and that the product discharged from the bed is more difficult to crush.

According to another known process (see British Patent Specification No. 990,487) an ammoniumnitrate melt or solution, which may or may not contain magnesiumnitrate, is granulated at a relatively low bed temperature (106—108°C) by the so-called cold spherodizer method. In dependence on the water content of the ammoniumnitrate, this results in a more or less porous product. For instance, if the product is made from a 99.8% melt, its bulk density will be about 910 g/l, if it is made from a 95% solution, about 835 g/l. A disadvantage of this known process is therefore, that the bulk density of the product obtained is rather low. Moreover, the water content is found to remain rather high.

The invention provides a process ruling out the abovementioned disadvantages completely or almost completely.

According to the invention, this is achieved in that an ammoniumnitrate-containing melt including at most 1.5% wt. water and 0.2—1% wt. magnesiumnitrate, calculated as magnesiumoxide in relation to the quantity of ammoniumnitrate and having a temperature of at least 5°C above its crystallization point, is sprayed into a fluidized bed of ammonium nitrate-containing seed particles having a temperature of between 90 and 120°C, which bed is fluidized by passing air through the bed from bottom to top with a superficial velocity that is 1,5 to 2,5 times the minimum fluidization velocity, and wherein the melt is sprayed by means of a current of air having a temperature that is about equal or slightly lower than that of the melt, in such an amount that the air-to-melt mass ratio is in the range of from 1:1 to 1:4, the granules formed are continuously discharged from the bed and screened to separate therefrom a product fraction, whereafter this latter fraction is cooled to a temperature of below 50°C by means of one or more fluid-bed coolers.

With the process according to the invention a granular product is obtained which, on the one hand, has high thermal stability and a high bulk density, and, on the other hand, has an extremely low water content (≤0.2% wt.) and excellent impact and crushing resistance, whilst hardly caking.

It has been found to be unnecessary in this process to apply slow cooling—as is described in US Patent Specification 4.316.736—in the range between 70 and 50°C. Use can therefore be made of a rapid cooling method, e.g. fluid-bed cooling, which brings an economization in cooling equipment. All the more so, as it has been found that rapid cooling of the granules results in a product of increased bulk density.

By preference use is made of a melt which contains at most 0.5% wt. water and 0.3—0.4% wt. magnesiumnitrate, calculated as magnesiumoxide in relation to the quantity of ammoniumnitrate, and in which the amount of water is equal to or smaller than the amount of magnesiumnitrate. The magnesiumnitrate may be added as such to the melt or to the ammoniumnitrate solution to be subjected to evaporation. It is also possible to add magnesiumoxide, or a magnesium salt reacting in situ while forming magnesiumnitrate, to the nitric acid used for the preparation of ammoniumnitrate or to the ammoniumnitrate obtained therefrom after ammoniation and, possibly, evaporation.

The temperature of the melt should be at least 5°C above the crystallization temperature, and should, in general, be lower than the temperature at which the melt boils at atmospheric pressure.

The melt can be sprayed onto the bed of seed particles, for instance by means of a single-phase spray. By preference the melt is sprayed into the bed. This can be done in a known way by means of an air current, for instance in a two-phase spray. In particular, the melt is sprayed from the bottom upward into a fluid bed. For spraying the melt use is made advantageously of an air current having a temperature that is about equal to or slightly lower than that of the melt, in such an amount that the air-to-melt mass ratio is 1:1 to 1:4. The fluidization gas is passed through the bed of seeds from bottom to top, with, in general, a superficial velocity that is 1.5—2.5 times, in particular about twice, the minimum fluidization velocity. By 'minimum fluidization velocity' is understood the minimum velocity that suffices to support the weight of the seed particles in the bed (in the case of $NH_4NO_3$ with a mean particle size of 3 mm, it is about 1.2 m/sec).

The temperature of the fluidization gas (air) may vary. In general such a temperature is applied that, in combination with the temperature of the seeds fed in, the resulting bed temperature will have the desired value.

The seed particles used are by preference formed by the oversize and undersize fractions obtained after screening of the granules discharged from the bed, with the oversize fraction being crushed before use. If so desired, it is also possible to return part of the product fraction, after crushing.

The amount of the material returned to the bed may vary; by preference it is such that the weight ratio of returned material to inflowing melt is 1:1 to 1:2. The diameter of the seeds introduced into the bed is preferably between 0.75 and 2.0 mm. The height of the bed is in general 0.5 to 1.0 m.

The temperature of the bed (90—120°C) is determined by temperature and quantity of the melt, the spray gas, the fluidization gas, and the incoming seeds. The heat input, notably the input in the form of heat (of crystallization) of the melt and the spray gas is such that for maintaining the bed temperature at a value below 90°C, special provisions would be required, which provisions would make the process appreciably more expensive whereas for maintaining a temperature above 120°C an extra heat input into the bed would be required.

In particular, the temperature of the bed is controlled with the aid of the temperature of the fluidization gas and that of the seeds fed in (recycle material). For reasons of economy, such a temperature is preferably used that the fluidization gas requires no or hardly any preheating, so that, for instance, air of ambient temperature, or, for instance, the air from the cooling stage, if used, can be applied.

It may in some cases be of importance not to cool the recycled seed material to below about 50°C, in connection with the crystal-phase transitions of the ammoniumnitrate.

By preference the bed temperature is controlled at 100—110°C, with fluidization gas having a temperature of between about 15 and 60°C, and recycled material having a temperature of between 50 and 100°C being applied. The latter temperature can be obtained by cooling the granules discharged from the bed before they are screened, and/or by cooling the recycle material.

The granules discharged from the bed are cooled before and/or after screening. By preference use is made to this end of a rapid cooling technique, in particular of fluid bed cooling, performed in one or more coolers. The heated cooling gas (air) leaving the cooler(s) can advantageously be used as fluidization gas for the bed of seeds.

The air issuing from the fluidized bed can be cleaned of dust particles in a known way, for instance by washing with water or a dilute solution containing ammoniumnitrate.

The product granules resulting after screening and cooling can be further in a known way; for instance, a coating agent can be applied to them, to prevent dust formation and/or moisture absorption. Drying of the product obtained by the present process is not necessary. It may be of importance, however, to subject the granules discharged from the bed, optionally after cooling and/or screening, to a regular rolling motion in a rotary drum at constant temperature, with exclusion of current air, so as to effect a further rise of the bulk density.

Although the present process has special importance for the preparation of ammoniumnitrate granules, it can be used also for preparing granules which, in addition to ammoniumnitrate and magnesiumnitrate, contain other components, for instance fillers (marlstone or dolomite), trace elements, agrochemicals (herbicides etc.), and fertilizer salts.

The invention will be further elucidated in the following examples.

Example 1

A continuous flow of an ammoniumnitrate melt, amounting to 92 kg/h, was supplied to a circular fluid-bed granulator having a diameter of 45 cm and provided with a perforated bottom, which contained a bed of ammoniumnitrate seed particles (mean diameter 3 mm) having a height of 40 cm.

The melt, which had a temperature of 170°C and contained 0.54% wt. water and 0.33% wt. magnesiumnitrate, calculated as magnesiumoxide, was sprayed laterally into the bed by means of a two-phase spray, with the help of a current of air (temperature 167°C). The spraying air was supplied at the rate of 59 kg/h. The bed of particles had a temperature of 105°C and was fluidized by means of an upward air current (temp. 85°C), flowing with a superficial velocity of 2.44 m/sec, at the rate of 1180 kg/h.

Via an overflow, granules were continuously discharged from the bed to a screen, where they were separated into a fine fraction (particle size <2 mm), a product fraction (2—4 mm), and a coarse fraction (>4 mm), which last fraction was subsequently crushed on crusher rollers.

The fine fraction and the crushed coarse fraction were then returned to the bed at a temperature of about 90—95°C. The product fraction was rapidly cooled in a fluid bed cooler to about 30°C. The product properties were as shown in the table below. Part of this product was cooled to about 15°C and then heated to 50°C and cooled to 15°C five times. The product thus treated had a crushing strength of 35 bar and an oil-absorption capacity of 1.10% wt. No measurable increase in volume had occurred.

Example 2

In the same way as described in Example 1, 92 kg/h of an $NH_4NO_3$ melt, containing 0.54% wt. water and 0.33% wt. MgO in the form of magnesiumnitrate, and having a temperature of 170°C, was sprayed, with the help of 43 kg/h air (temp. 165°C) through a two-phase spray, laterally into a bed of seeds (temp. 116°C) fluidized by means of 1180 kg/h air, flowing with a superficial velocity, of 2.51 m/sec and having a temperature of 95°C.

The properties of the product granules obtained after screening and cooling are, again shown in the table. Part of the product was subjected to five 15—50°C cycles. The granules then resulting had a crushing strength of 40 bar and an oil-absorption capacity of 0.75% wt. No measurable increase in volume had occurred.

| | Example 1 | Example 2 |
|---|---|---|
| N content % | 34.40 | 34.40 |
| $H_2O$ content, % wt | 0.19 | 0.14 |
| bulk density, g/l | 940 | 960 |
| rolling capacity, % round | 90 | 80 |
| impact resistance, % | 100 | 100 |
| crushing strength, bar | 35 | 45 |
| oil-absorption capacity, % wt | 1.00 | 0.60 |
| $d_{50}$ mm | 3.65 | 2.90 |

Example 3

In the same way as described in Example 1, an $NH_4NO_3$ melt (temp. 175°C, 0.3% wt. $H_2O$, 0.3% wt. MgO) was sprayed into a fluidized bed of seed particles (temp. 95°C). The granular product obtained after screening and cooling had a bulk density of about 935 g/l and contained 0.2% wt. water.

Example 4

In the same way as described in Example 1, an $NH_4NO_3$ melt (temp. 165°C, 1.2% wt. $H_2O$, 0.4% wt., MgO) was sprayed into a fluidized bed of seeds (temp. 115°C).

The granules obtained after screening and cooling had a bulk density of 930 g/l and a water content of 0.2% wt.

**Claims**

1. Process for preparing thermally stable ammonium nitrate-containing granules of high bulk density, on the basis of a melt containing magnesium nitrate and ammonium nitrate, by spraying said melt into a fluidized bed of ammonium nitrate-containing seed particles, characterized in that an ammonium nitrate-containing melt including at most 1,5% wt. of water and 0,2—1% wt. of magnesium nitrate, calculated as magnesium oxide in relation to the quantity of ammonium nitrate and having a temperature of at least 5°C above its crystallization point, is sprayed into a fluidized bed of ammonium nitrate-containing seed particles having a temperature of between 90 and 120°C, which bed is fluidized by passing air through the bed from bottom to top with a superficial velocity that is 1,5 to 2,5 times the minimum fluidization velocity, and wherein the melt is sprayed by means of a current of air having a temperature that is about equal or slightly lower than that of the melt, in such an amount that the air-to-melt mass ratio is in the range of from 1:1 to 1:4, the granules formed are continuously discharged from the bed and screened to separate therefrom a product fraction, whereafter this latter fraction is cooled to a temperature of below 50°C by means of one or more fluid-bed coolers.

2. Process according to claim 1, characterized in that an ammoniumnitrate-containing melt including at most 0.5% wt. water and 0.3—0.4% wt. magnesiumnitrate, calculated as magnesiumoxide in relation to the quantity of ammoniumnitrate, is sprayed, and in that a bed temperature of 100—110°C is applied.

3. Process according to claim 1 or 2, characterized in that the gas leaving the fluid bed cooler(s) is used, at least in part, as fluidization gas for the bed of seed particles.

4. Process according to any one of the claims 1—3, characterized in that the granules discharged from the bed are subjected, optionally after cooling and/or screening, to a regular rolling motion constant temperature in a rotary drum at through which no current of air is passed.

5. Process according to any one of the claims 1—4, characterized in that the ammoniumnitrate-containing melt to be sprayed also contains one or more fillers, trace elements, agrochemicals and/or fertilizer salts.

**Patentansprüche**

1. Verfahren zur Herstellung von thermisch stabilen, Ammoniumnitrat enthaltenden Granulatkörnern mit hoher schüttdichte auf der Basis einer Magnesiumnitrat und Ammoniumnitratenthaltenden Schmelze durch Versprühen der Schmelze in ein Wirbelbett aus Ammoniumnitrat enthaltenden Keimteilchen, dadurch gekennzeichnet, daß man eine Ammoniumnitrat enthaltende Schmelze mit einem Gehalt von höchstens 1,5 Gew.-% Wasser und 0,2 bis 1 Gew.-% Magnesiumnitrat, berechnet als Magnesiumoxid, bezogen auf die Menge an Ammoniumnitrat, und einer Temperatur von wenigstens 5°C oberhalb ihrer Kristallisationstemperatur in ein Wirbelbett von Ammoniumnitrat enthaltenden Keimteilchen mit einer emperatur zwischen 90 und 120°C versprüht, welches Bett im Wirbelzustand gehalten wird, indem man Luft vom Boden bis zum oberen Ende mit einer Oberflächengeschwindigkeit betragend das 1,5- bis 2,5-fache de Mindestfluidisierungsgeschwindigkeit durchbläst, wobei die Schmelze mittels eines Luftstromes von einer Temperatur, die etwa gleich oder gering niedriger ist als die der Schmelze, in einer Menge, daß das Masseverhältnis von Luft zu Schmelze im Bereich von 1:1 bis 1:4 liegt, versprüht wird, und man die gebildeten Granulatkörner kontinuierlich aus dem Bett abzieht und siebt, um daraus eine Produktfraktion abzutrennen, wonach man diese letzgenannte Produktfraktion mittels eines oder mehrerer Wirbelschichtkühler auf eine Temperatur unter 50°C abkühlt.

2. Verfahren nach Anspruch 1, dadurch gekennzeichnet, daß eine Ammoniumnitrat enthaltende Schmelze mit einem Gehalt von höchstens 0,5 Gew.-% Wasser und 0,3 bis 0,4 Gew.-% Magnesiumnitrat, berechnet als Magnesiumoxid, bezogen auf die Menge an Ammoniumnitrat, versprüht und daß eine Bettemperatur von 100 bis 110°C angewendet wird.

3. Verfahren nach Anspruch 1 oder 2, dadurch gekennzeichnet, daß das den (die) Wirbelbettkühler verlassende Gas zumindest teilweise als Wirbelgas für das Keimteilchenbett verwendet wird.

4. Verfahren nach einem der Ansprüche 1—3, dadurch gekennzeichnet, daß die aus dem Bett abgezogenen Granulatkörner, gegebenenfalls nach dem Kühlen und/oder Sieben, einer geregelten Rollbewegung bei konstanter Temperatur in einer rotierenden Trommel, durch die kein Luftstrom hindurchgeführt wird, unterwirft.

5. Verfahren nach einem der Ansprüche 1—4, dadurch gekennzeichnet, daß die Ammoniumnitrat enthaltende, zu versprühende Schmelze auch einen oder mehrere Füllstoffe, Spurenelemente, Agrarchemikalien und/oder Düngesalze enthält.

**Revendications**

1. Procédé de préparation de granulés contenant du nitrate d'ammonium thermiquement stables et de densité apparente élevée, à partir d'une masse fondue contenant du nitrate de magnésium et du nitrate d'ammonium, obtenus par pulvérisation de la masse fondue dans un lit fluidisé de particules de germination contenant du nitrate d'ammonium, caractérisé en ce qu'une masse fondue contenant du nitrate d'ammonium y compris au maximum 1,5% en poids d'eau et 0,2—1% en poids de nitrate de magnésium, calculé sous forme d'oxyde de magnésium par rapport à la quantité de nitrate d'ammonium et ayant une température supérieure d'au moins 5°C à son point de cristallisation, est pulvérisée dans un lit fluidisé de particules de germination contenant du nitrate d'ammonium ayant une température comprise entre 90 et 120°C, ce lit est fluidisé en faisant passer un courant d'air à travers le lit de bas en haut à une vitesse superficielle qui est de 1,5 à 2,5 fois la vitesse minimale de fluidisation et dans lequel la masse fondue est pulvérisée au moyen d'un courant d'air ayant une température presque égale ou légèrement inférieure à celle de la masse fondue, en quantité telle que le rapport massique de l'air à la masse fondue est dans la plage de 1:1 à 1:4, les granulés formés sont séparés en continu du lit et tamisés pour en séparer une fraction de produit, après quoi, cette dernière fraction est refroidie à une température inférieure à 50°C au moyen d'un ou plusieurs réfrigerants de lit fluidisé.

2. Procédé selon la revendication 1, caractérisé en ce qu'on pulvérise une masse fondue contenant du nitrate d'ammonium y compris au maximum 0,5% en poids d'eau et 0,3—0,4% en poids de nitrate de magnésium, calculé sous forme d'oxyde de magnésium par rapport à la quantité de nitrate d'ammonium, et en ce qu'une température de lit de 100—110°C est utilisée.

3. Procédé selon la revendication 1 ou 2, caractérisé en ce que le gaz sortant du/des refrigérant(s) de lit fluidisé est utilisé au moins en partie, comme gaz de fluidisation du lit de particules de germination.

4. Procédé selon l'une quelconque des revendications 1 à 3, caractérisé en ce que les granulés séparés du lit sont soumis, éventuellement après refroidissement et/ou tamisage, à un mouvement régulier de roulement à température constante dans un tambour rotatif dans lequel ne passe aucun courant d'air.

5. Procédé selon l'une quelconque des revendications 1 à 4, caractérisé en ce que la masse fondue contenant le nitrate d'ammonium à pulvériser contient aussi une ou plusieurs charges, des éléments à l'état de trace, des produits agrochimiques et/ou des sels fertilisants.